# EUROPEAN PATENT SPECIFICATION

(11) **EP 4 462 950 B1**
(45) Date of publication and mention of the grant of the patent: **08.10.2025**
(21) Application number: 23172379.2
(22) Date of filing: 09.05.2023
(51) Int. Cl.: H05B 3/26, F24H 9/1818, F24H 1/12, F24H 1/00, B60H 1/22, H01H 33/59, H05B 1/02

(54) **HEATING DEVICE**
HEIZEINRICHTUNG
DISPOSITIF DE CHAUFFAGE

(43) Date of publication of application: 13.11.2024
(73) Proprietor: BorgWarner Inc., Auburn Hills, MI 48326 (US)
(72) Inventor: Casas, Julio, 36350 Nigrán (Pontevedra) (ES); Viana, José, 36350 Nigrán (Pontevedra) (ES); Muños, Mauricio, 36350 Nigrán (Pontevedra) (ES); Ramírez, Luis, 36350 Nigrán (Pontevedra) (ES); Pais, Pablo, 36350 Nigrán (Pontevedra) (ES)
(74) Representative: Twelmeier Mommer & Partner

(56) References cited:
- WO-A1-2013/030048
- US-A1- 2020 146 110
- US-A1- 2021 227 631
- US-A1- 2022 082 297

## Description

The invention refers to a heating device, especially for an automobile. A heating device according to the preamble of claim 1 is known from US 2020/0146110 A1. A similar heating device is disclosed in US 2022/0082297 A1.

Heating devices, like flow heaters, comprising a heating resistor assembly, e.g. a metallic heating plate with a resistive track, are used in automobiles for heating various fluids, e.g. air, water or aqueous solutions. As the on-board supply voltage of automobiles has been increased to several hundred volts, it is becoming more difficult to meet stringent requirements for electromagnetic compatibility, especially if the heating device is operated with a pulse width modulated voltage.

An object of the invention is to show how electromagnetic compatibility of a heating device for high voltage applications can be improved at low cost.

This object is achieved with a heating device according to claim 1. Advantageous refinements of the invention are the matter of dependent claims.

A heating device according to the present invention comprises a heating resistor assembly which comprises a positive terminal, a negative terminal, and heating resistors connected in series between the positive terminal and the negative terminal.

According to the present invention, electromagnetic emissions are minimized in such a way that a first half of the heating resistors connects a positive terminal of the heating resistor assembly to a transistor switch and a second half of the heating resistors connects the transistor switch to a negative terminal of the heating resistor assembly. The heating load is split into a first half and a second half arranged on a high side and a low side of the transistor switch, respectively. Parasitic capacitances of the heating load are thereby separated into parasitic capacitances of the first and the second half of the heating resistors and are thereby balanced.

When the transistor switch is open, parasitic capacitances between the first half of the heating load and the parasitic capacitances of the second half of the heating load are of opposite polarity so they are charged in opposite direction. When the transistor switch closes, the parasitic capacitances are discharged between them. The system is thereby balanced and currents charging and discharging the parasitic capacitances of each half of the heating load cancel each other to a large extent, reducing the common mode current generated by the system, especially if both halves of the heating load are electrically symmetrical. Radiated and conducted emissions are thereby greatly reduced and electromagnetic compatibility improved, which is especially important for heating devices in automobiles.

In a refinement of the invention, the heating resistor assembly is a heating plate comprising a metal sheet, on which the heating resistors are arranged as resistive tracks, and an insulation layer insulating the resistive tracks from the metal sheet. A first half of the resistive tracks then connects the positive terminal to the transistor switch and a second half of the resistive tracks connects the transistor switch to the negative terminal. Parasitic capacitances of the heating load are thereby separated into parasitic capacitances between the first half of the resistive tracks and the metal plate and parasitic capacitances between the second half of the tracks and the metal plate.

When the transistor switch is open, the parasitic capacitances between the first half of the tracks and the metal plate and the parasitic capacitances between the second half of the tracks and the metal plate are of opposite polarity so they are charged in opposite direction. When the transistor switch closes, the parasitic capacitances are discharged between them. The system is thereby balanced and the currents both charging and discharging of the parasitic capacitances of each half of the resistive tracks cancel each other to a large extent, reducing the common mode current generated by the system, especially if both halves of the resistive tracks are electrically symmetrical. Radiated and conducted emissions are thereby greatly reduced and electromagnetic compatibility improved. In a refinement of the invention, both halves of the resistive tracks load are physically or geometrically symmetrical. Thereby electrical symmetry can be achieved more easily to a larger extent.

As described above, the heating resistor assembly may be a heating plate with resistive tracks. In another embodiment of the invention, the heating resistor assembly may comprise PTC resistor plates or blocks, e.g. in heating rods of an air heater.

The above-mentioned aspects of exemplary embodiments will become more apparent and will be better understood by reference to the following description of an illustrative embodiment of the invention taken in conjunction with the accompanying drawings, wherein:
- Fig. 1: shows an illustrative embodiment of a flow heater;
- Fig. 2: shows a cross-sectional view of fig. 1;
- Fig. 3: shows a circuit diagram of the flow heater; and
- Fig. 4: shows an example of a heating plate of the flow heater.

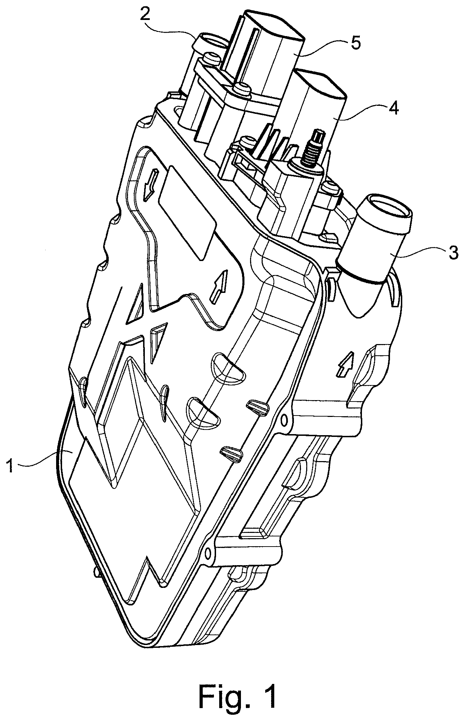

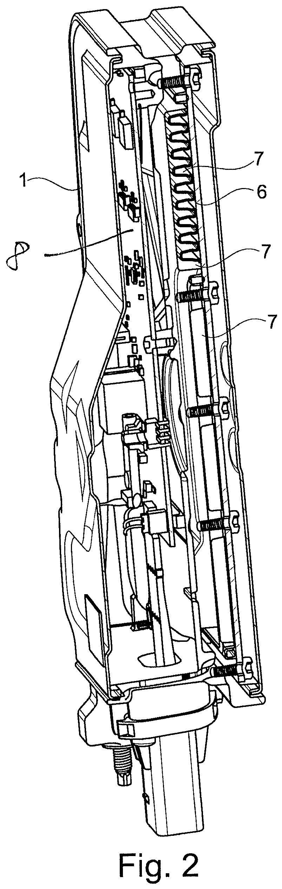

The heating device shown in Figures 1 and 2 is a flow heater for an automobile. The flow heater has a housing 1 with an inlet 2 and an outlet 3 as well as electrical connectors 4, 5 and a heating resistor assembly provided as a heating plate 6. A flow channel for liquid to be heated extends in the housing 1 from the inlet 2 to the outlet 3.

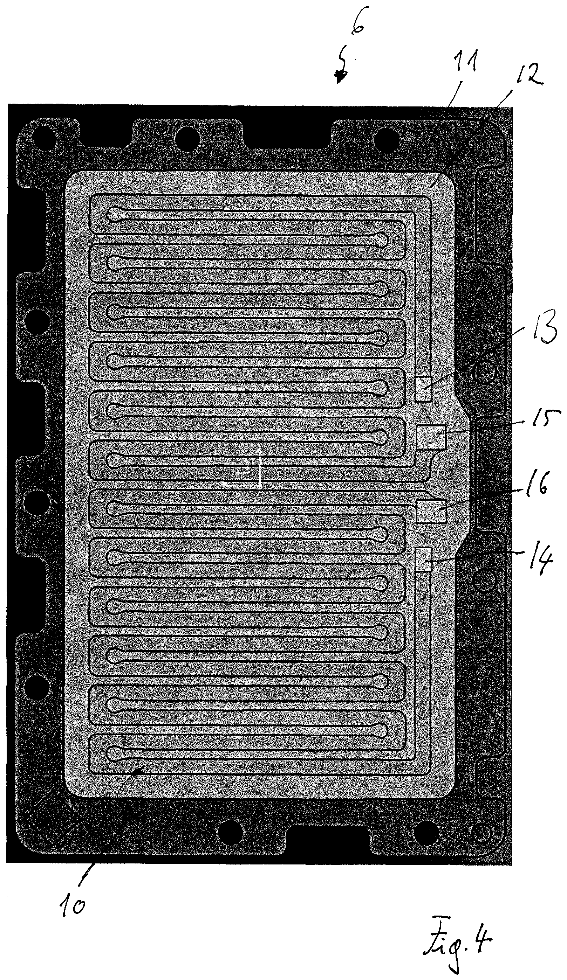

The flow channel runs along a heating plate 6. In order to improve heat dissipation to the liquid in the flow channel, the metal plate 6 may carry a corrugated sheet 7, which protrudes into the flow channel. On its dry side the heating plate 6 shown in fig. 4 comprises heating resistors 10 provided in the as resistive tracks. In operation, heating current flows through these resistive tracks 10 of the heating plate 6. In a dry compartment of the housing 1 is control circuitry 8 for controlling heating power by pulse with modulation of heating current.

The heating resistors 10 of the heating plate 6 may be electrically connected to the control circuitry by means of press-fit contacts that are pressed into openings of a circuit board and soldered to the heating plate 6.

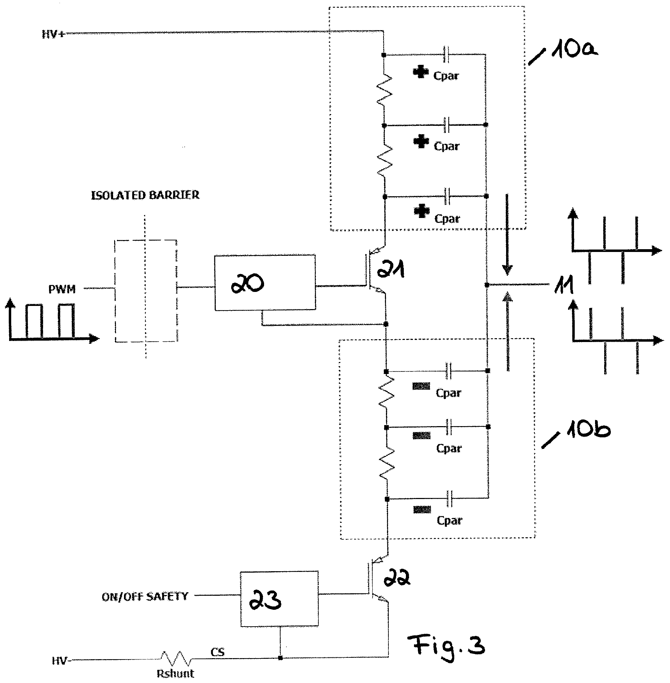

Fig. 3 shows schematically a circuit diagram of the flow heater that is configured to be operated at high voltage, e.g. voltage in the rage of 100 V to 1 kV. The control circuitry comprises a driver 20 that operates a transistor switch 21 for pulse width modulation. Switch 21 is a high side switch. While it is closed, a duty cycle of pulse width modulation is applied and heating current flows through a heating resistor provided as a resistive track of the heating plate 6. As can be seen in fig. 3, the high side switch 21 splits the resistive tracks and thereby the heating resistors 10 into a first half 10a and a second half 10b. When switch 21 is open, the first half 10a of the heating resistors 10 is on positive potential and the second half of the heating resistors 10 is on negative potential. Both halves 10a, 10b form a capacitance with a metallic substrate 11 of the resistive tracks, e.g. a plate made of steel or aluminum. The metallic substrate 11 may be grounded by an electrical connection to mass.

Parasitic capacitances of the first half 10a of the resistive tracks and parasitic capacitances of the second half 10b of the resistive tracks are therefore charged with opposite polarity. Therefore, any radiated and conducted emissions caused by these parasitic capacitances are canceled to a large extent, especially if the heating plate 6 is designed symmetrically on both side of the transistor switch 21.

Fig. 4 shows an illustrative embodiment of the heating plate 6. The heating plate 6 comprises a metal sheet 11, e.g. a steel or aluminum sheet, as a substrate and heating resistors 10 provided as resistive tracks that are electrically insulated from the metal sheet 11 by means of an insulating layer 12 arranged between the metal sheet 11 and the resistive tracks. The resistive tracks might be printed onto the insulating layer 12 or deposited on it by other means, e.g. physical or chemical vapor deposition.

The heating plate 6 has a positive terminal 13 for connection to positive potential and a negative terminal 14 for connection to negative potential of a high voltage source. The positive terminal 13 and the negative terminal 14 are provided as solder pads at the ends of the resistive tracks such that a connection to circuit board 8 may be made by soldering a connector pin to the terminals 13, 14, e.g. as a surface mounted device.

The transistor switch 21 shown in fig. 3 is electrically connected to solder pads 15, 16, e.g. by means of connector pins soldered to solder pads 15, 16 and may be arranged on printed circuit board 8. As can be seen in fig. 4, a first half 10a of the resistive tracks runs from the positive terminal 13 to solder pad 15 and thereby electrically connects the positive terminal 13 to transistor switch 21 of fig. 3. A second half 10b of the resistive tracks runs from solder pad 16 to the negative terminal 14 and thereby electrically connects the transistor switch 21 to the negative terminal 14.

The heating plate 6 may have a symmetrical design as shown in fig. 4 to have electrical symmetry. Then the parasitic capacitances of the first half 10a and the second half 10b of the resistive tracks are balanced to the largest extent possible and emissions can thus be minimized.

In addition to the transistor switch 21 for pulse width modulation, the control circuitry comprises safety switch 22, being a low side switch, that is operated by a driver 23, e.g. if overheating is detected.

### List of reference signs

- 1: housing
- 2: inlet
- 3: outlet
- 4: electrical connector
- 5: electrical connector
- 6: heating plate
- 7: corrugated sheet
- 8: control circuitry
- 10: heating resistors
- 10a: first half of heating resistors
- 10b: second half of heating resistors
- 11: metal sheet
- 12: insulating layer
- 13: positive terminal
- 14: negative terminal
- 15: solder pad
- 16: solder pad
- 20: driver
- 21: transistor switch
- 22: safety switch
- 23: driver

## Claims

1. Heating device comprising
a heating resistor assembly comprising a positive terminal (13), a negative terminal (14), and heating resistors (10, 10a, 10b) connected in series between the positive terminal (13) and the negative terminal (14), and
a transistor switch (21) connected in series with the heating resistors (10),
wherein a first half (10a) of the heating resistors connects the positive terminal (13) to the transistor switch (21) and a second half (10b) of the heating resistors connects the transistor switch (21) to the negative terminal (14),
**characterized in that**
the transistor switch (21) is a high-side switch (21), and
**characterized by** a low side switch (22) between the negative terminal (14) of the heating resistor assembly and a negative terminal of the heating device.

2. Heating device according to claim 1, wherein the heating resistor assembly is a heating plate (6) comprising a metal sheet (11), on which the heating resistors (10, 10a, 10b) are arranged as resistive tracks, and an insulation layer (12) insulating the resistive tracks from the metal sheet (11).

3. Heating device according to claim 2, further comprising
a housing (1) with an inlet (2) and an outlet (3), wherein the heating plate (6) is arranged inside the housing (1) for heating liquid flowing from the inlet (2) to the outlet (3).

4. Heating device according to claim 3, wherein the transistor switch (21) is arranged inside the housing at a distance from the heating plate (6).

5. Heating device according to any one of claims 2 to 4, wherein the heating resistors (10, 10a, 10b) are a resistive layer printed onto the insulation layer (12).

6. Heating device according to any one of the preceding claims, wherein the first half (10a) of the heating resistors (10) is electrically symmetrical to the second half (10b) of the heating resistors (10).

7. Heating device according to any one of the preceding claims, further comprising control circuitry (8) operating the transistor switch (21) for controlling heating power by pulse with modulation.

## Patentansprüche

1. Heizeinrichtung mit
einer Heizwiderstandsbaugruppe mit einem positiven Anschluss (13), einem negativen Anschluss (14) und Heizwiderständen (10, 10a, 10b), die zwischen dem positiven Anschluss (13) und dem negativen Anschluss (14) in Reihe geschaltet sind, und
einem Transistorschalter (21), der mit den Heizwiderständen (10) in Reihe geschaltet ist, wobei eine erste Hälfte (10a) der Heizwiderstände den positiven Anschluss (13) mit dem Transistorschalter (21) verbindet und eine zweite Hälfte (10b) der Heizwiderstände den Transistorschalter (21) mit dem negativen Anschluss (14) verbindet,
**dadurch gekennzeichnet, dass**
der Transistorschalter (21) ein High-Side-Schalter (21) ist, und
**gekennzeichnet durch** einen Low-Side-Schalter (22) zwischen dem negativen Anschluss (14) der Heizwiderstandsbaugruppe und einem negativen Anschluss der Heizeinrichtung.

2. Heizeinrichtung nach Anspruch 1, wobei die Heizwiderstandsbaugruppe eine Heizplatte (6) ist, die ein Metallblech (11), auf dem die Heizwiderstände (10, 10a, 10b) als Leiterbahnen angeordnet sind, und eine Isolierschicht (12), welche die Leiterbahnen vom Metallblech (11) isoliert, aufweist.

3. Heizeinrichtung nach Anspruch 2, mit
einem Gehäuse (1) mit einem Einlass (2) und einem Auslass (3), wobei die Heizplatte (6) innerhalb des Gehäuses (1) angeordnet ist, um Flüssigkeit zu erwärmen, die vom Einlass (2) zum Auslass (3) fließt.

4. Heizeinrichtung nach Anspruch 3, wobei der Transistorschalter (21) innerhalb des Gehäuses in einem Abstand von der Heizplatte (6) angeordnet ist.

5. Heizeinrichtung nach einem der Ansprüche 2 bis 4, wobei die Heizwiderstände (10, 10a, 10b) eine auf die Isolierschicht (12) aufgedruckte Widerstandsschicht sind.

6. Heizeinrichtung nach einem der vorstehenden Ansprüche, wobei die erste Hälfte (10a) der Heizwiderstände (10) elektrisch symmetrisch zur zweiten Hälfte (10b) der Heizwiderstände (10) ist.

7. Heizeinrichtung nach einem der vorstehenden Ansprüche, mir einer Steuerschaltung (8), die den Transistorschalter (21) betätigt, um die Heizleistung durch Impulsmodulation zu steuern.

## Revendications

1. Dispositif de chauffage comprenant
un ensemble de résistances chauffantes comprenant une borne positive (13), une borne négative (14) et des résistances chauffantes (10, 10a, 10b) connectées en série entre la borne positive (13) et la borne négative (14), et
un commutateur de transistor (21) connecté en série avec les résistances chauffantes (10), dans lequel une première moitié (10a) des résistances chauffantes connecte la borne positive (13) au commutateur de transistor (21) et une seconde moitié (10b) des résistances chauffantes connecte le commutateur de transistor (21) à la borne négative (14),
**caractérisé en ce que**
le commutateur de transistor (21) est un commutateur « high-side » (21), et **caractérisé par** un commutateur « low-side » (22) entre la borne négative (14) de l'ensemble de résistances chauffantes et une borne négative du dispositif de chauffage.

2. Dispositif de chauffage selon la revendication 1, dans lequel l'ensemble de résistances chauffantes est une plaque chauffante (6) comprenant une feuille métallique (11), sur laquelle les résistances chauffantes (10, 10a, 10b) sont disposées sous forme de pistes résistives, et une couche isolante (12) isolant les pistes résistives de la feuille métallique (11).

3. Dispositif de chauffage selon la revendication 2, comprenant en outre
un boîtier (1) avec une entrée (2) et une sortie (3), dans lequel la plaque chauffante (6) est disposée à l'intérieur du boîtier (1) pour chauffer le liquide s'écoulant de l'entrée (2) vers la sortie (3).

4. Dispositif de chauffage selon la revendication 3, dans lequel le commutateur de transistor (21) est disposé à l'intérieur du boîtier à une distance de la plaque chauffante (6).

5. Dispositif de chauffage selon l'une quelconque des revendications 2 à 4, dans lequel les résistances chauffantes (10, 10a, 10b) sont une couche résistive imprimée sur la couche isolante (12).

6. Dispositif de chauffage selon l'une quelconque des revendications précédentes, dans lequel la première moitié (10a) des résistances chauffantes (10) est électriquement symétrique à la seconde moitié (10b) des résistances chauffantes (10).

7. Dispositif de chauffage selon l'une quelconque des revendications précédentes, comprenant en outre un circuit de commande (8) actionnant le commutateur de transistor (21) pour commander la puissance de chauffage par impulsions avec modulation.
